# EUROPEAN PATENT SPECIFICATION

(11) **EP 0 563 756 B1**
(45) Date of publication and mention of the grant of the patent: **10.04.1996**
(21) Application number: 93104759.1
(22) Date of filing: 23.03.1993
(51) Int. Cl.: D06B 1/02

(54) **Method of metering the rate of flow of a dye solution**
Verfahren zum Dosieren des Farbstofflösungsdurchflusses
Procédé de dosage de débit d'une solution de colorant

(30) Priority: 01.04.1992 JP 109363/92
(43) Date of publication of application: 06.10.1993
(73) Proprietor: YKK CORPORATION, Chiyoda-ku, Tokyo (JP)
(72) Inventor: Yamakita, Yoshimichi, Toyama-ken (JP)
(74) Representative: Casalonga, Axel

(56) References cited:
- EP-A- 0 398 126
- EP-A- 0 481 686

## Description

This invention relates to a method of metering the rate of a dye solution to be applied by a spray nozzle to an elongate cloth article such as a slide fastener chain, a slide fastener stringer tape, a surface fastener, a ribbon and the like.

Spray coating is one of the most widely used techniques for dyeing an elongate web material such as textile tapes as typically disclosed in Japanese Laid-Open Patent Publication No. 2-307960 (EP-A-0398126) in which there is disclosed a spray dyeing apparatus including a spray nozzle for applying a jet of liquid dye to a tape material while the latter is being fed continuously in a vertically upward or downward direction.

In order for the material to be dyed at a uniform density of color and hue, it is always necessary to control both the amount of dye solution to be applied and the speed of feed of the material to be dyed. Usually, the jet pressure of a dye solution from a spray nozzle is adjusted to provide a desired color intensity. However, for one reason or another, irregularities would often occur in the color intensity of a finished material despite normal daily operating supervision. It has been found that the principal cause for such a dyeing problem is associated with the spray nozzle used for atomizing and applying a dye solution to a given fabric material and particularly in most cases attributable to the nozzle being plugged up or its tip being worn by abrasion, resulting in variations in the jet opening of the nozzle and hence in irregularly or defectively dyed material.

It has also been found that even with new spray nozzles, tolerances for their tip size would somehow affect the amount of a dye solution to be applied. Such discrepancies in the rate of dye spray coating were unpredictable pending the appearance of a particular finished tape product, so that considerable textile materials would have been wasted when found defectively colored.

With the foregoing problems of the prior art in view, the present invention seeks to provide a novel method of metering the rate of a dye solution to be applied to an elongated fabric material whereby the material can be dyed to a uniform color intensity.

The above and other objects and features of the invention will appear clear from the following description taken in connection with the accompanying drawing.

According to the invention, there is provided a method of metering the rate of flow of a dye solution from a spray nozzle for dyeing an elongate fabric material, characterized in that said method comprises positioning the spray nozzle rotatably between a vertically supported plate member and a vertical run of the fabric material, spraying a test liquid equivalent to the dye solution over the plate member substantially equal in width to the fabric material to be dyed, allowing the test liquid to flow by gravity down the plate member, and measuring the rate of flow of the liquid per unit length of time as it is accumulated in a reservoir.

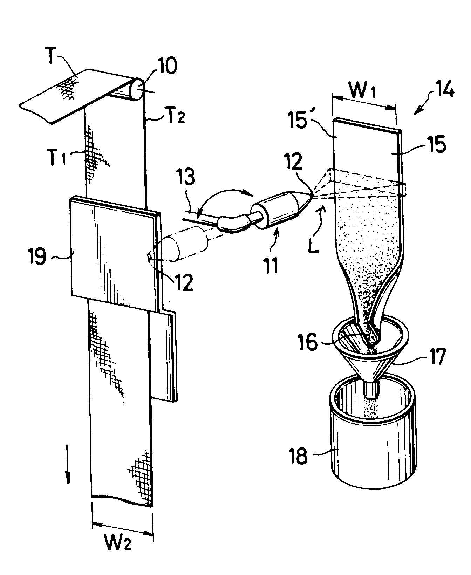

Figure 1 is a diagrammatic perspective view of an apparatus employed for carrying the method of the invention into practice.

Referring to Figure 1, there is shown a fabric material T in the form of an elongated tape having a width W₂ which is fed at a predetermined rate of speed vertically downward in the direction of the arrow past a guide roll 10.

Designated at 11 is a spray nozzle having a tip or jet opening 12 and rotatably mounted on a supply conduit 13 through which a liquid dye or dye solution (not shown) is supplied from a dye reservoir (not shown). The supply conduit 13 is rotatable by means not shown so as to rotate the spray nozzle 11 substantially through 180°.

A metering apparatus 14, a preferred means for carrying out the method of the invention, comprises a plate member 15 having a width W₁ substantially equal to the width W₂ of the fabric tape T and supported vertically in a position registering in confronting relation with a vertical run T₁ of the tape T and spaced apart therefrom by a distance such that the distance between the tip 12 of the nozzle 11 and the inner surface 15' of the plate member 15 is substantially equal to the distance between the tip 12 of the nozzle 11 and the inner surface T₂ of the fabric tape T when the nozzle 11 is flipped back toward the tape T as indicated by phantom line.

The plate member 15 is formed from a metal, synthetic resin, glass or like material which is impervious to liquid and glazed to a mirror-like surface such that a test liquid such as a dye solution cannot lend itself to deposit thereon. The plate member 15 has its lower portion inwardly folded or squeezed to form a narrow gutter portion 16 opening into a funnel 17 communicating with a metering receptacle 18.

In the practice of the invention, prior to a start of the dying operation by the spray nozzle 11 whether already used or newly replaced, a test liquid L equivalent to a dye solution to be actually applied or other solution having substantially the same viscosity, temperature and other properties as the dye solution is supplied through the supply conduit 13 and applied in atomized form over the inner surface 15' of the plate member 15, in which instance excess of the test liquid L is applied slightly beyond the full width of the plate member 15 to ensure full and complete coating coverage of the entire plate surface region in a manner simulative to the actual dyeing operation on the fabric tape T. The test liquid L flows by gravity down the plate surface 15', gathers at the gutter portion 16 and thence passes through the funnel 17 into the metering receptacle 18.

The rate of flow of test liquid L that has been accumulated in the receptacle 18 over a unit length of time is measured. The thus measured rate of test liquid L is representative of the rate of flow of a dye solution actually applied to the tape T and is a parameter indicative of the performance of the spray nozzle 11 used. It is therefore possible to determine the operating characteristics of a given spray nozzle from the rate of flow of test liquid L per unit length of time and thus to dye the tape T to a desired color intensity and uniformity by adjusting the jet pressure of the spray nozzle 11 and/or the speed of travel of the tape T in advance of start-up of the dyeing operating with a spray nozzle already used or with a replaced new spray nozzle.

Designated at 19 is a buffer plate mounted on the reverse side of the tape T to prevent drain of excess dye.

Whilst the tape T is illustrated as being fed vertically downward, it may be alternatively fed vertically upward.

## Claims

1. A method of metering the rate of flow of a dye solution from a spray nozzle (11) for dyeing an elongate fabric material (T), characterized in that said method comprises positioning said spray nozzle (11) rotatably between a vertically supported plate member (15) and a vertical run (T₁) of said fabric material (T), spraying a test liquid (L) equivalent to said dye solution over said plate member (15) substantially equal in width to said fabric material (T) to be dyed, allowing said test liquid (L) to flow by gravity down said plate member (15), and measuring the rate of flow of said liquid (L) per unit length of time as it is accumulated in a reservoir (18).

2. A method according to claim 1 characterized in that said spray nozzle (11) is spaced equi-distance apart from said plate member (15) and said vertical run (T₁) of said material (T), respectively.

3. A method according to claim 1 characterized in that said plate member (15) is formed from a material impervious to liquid.

4. A method according to claim 1 characterized in that said plate member (15) is glazed to prohibit deposit thereon of said test liquid (L).

5. A method according to claim 1 characterized in that said test liquid (L) has substantially the same viscosity and temperature as said dye solution.

## Patentansprüche

1. Verfahren zum Dosieren des Durchflusses einer Farbstofflösung durch eine Sprühdüse (11) zum Färben eines länglichen Textilmaterials (T), dadurch **gekennzeichnet**, daß dieses Verfahren umfaßt: verdrehbares Anordnen der Sprühdüse (11) zwischen einem vertikal abgestützten Plattenteil (15) und einem vertikalen Abschnitt (T1) des Textilmaterials (T), Aufsprühen einer der Farbstofflösung entsprechenden Versuchsflüssigkeit (L) auf das Plattenteil (15) über eine Breite, die im wesentlichen der Breite des zu färbenden Textilmaterials (T) gleicht, wobei die Versuchsflüssigkeit (L) durch die Schwerkraft an dem Plattenteil (15) nach unten fließen kann, und Messen der Durchflußmenge der Flüssigkeit (L) für eine Zeiteinheit, wie sie in einem Aufnahmebehälter (18) gesammelt wird.

2. Verfahren nach Anspruch 1, dadurch **gekennzeichnet**, daß die Sprühdüse (11) von dem Plattenteil (15) und von dem vertikalen Abschnitt (T1) des Textilmaterials (T) im gleichen Abstand angeordnet ist.

3. Verfahren nach Anspruch 1, dadurch **gekennzeichnet**, daß das Plattenteil (15) aus einem flüssigkeitsundurchlässigen Material hergestellt ist.

4. Verfahren nach Anspruch 1, dadurch **gekennzeichnet**, daß das Plattenteil (15) poliert ist, um eine Ablagerung der Versuchsflüssigkeit (L) zu verhindern.

5. Verfahren nach Anspruch 1, dadurch **gekennzeichnet**, daß die Versuchsflüssigkeit (L) im wesentlichen die gleiche Zähigkeit und Temperatur aufweist wie die Farbstofflösung.

## Revendications

1. Procédé de mesure du débit d'une solution d'écoulement projetée par un pulvérisateur (11) pour teindre un matériau textile allongé (T), caractérisé en ce qu'il consiste à positionner ledit pulvérisateur (11), d'une façon tournante, entre un élément formant plaque (15), supporté verticalement, et un tronçon vertical (T₁) dudit matériau textile (T), à pulvériser un liquide d'essai (L) équivalent à ladite solution de colorant sur ledit élément formant plaque (15) dont la largeur est sensiblement égale à la largeur du matériau textile à teindre, à laisser ledit liquide d'essai (L) s'écouler par gravité vers le bas le long dudit élément formant plaque (15), et à mesurer la quantité de liquide s'écoulant par unité de temps lorsqu'il s'est accumulé dans un réservoir.

2. Procédé selon la revendication 1, caractérisé en ce que ledit pulvérisateur (11) est espacé d'une même distance dudit élément formant plaque (15) et dudit tronçon (T₁) dudit matériau (T), respectivement.

3. Procédé selon la revendication 1, en ce que ledit élément formant plaque (15) est formé d'un matériau imperméable au liquide.

4. Procédé selon la revendication 1, caractérisé en ce que ladite élément formant plaque (15) est vitrifié afin d'empêcher que ledit liquide d'essai (L) se dépose sur cet élément.

5. Procédé selon la revendication 1, caractérisé en ce que ledit liquide d'essai (L) à sensiblement la même viscosité et se trouve à la même température que la solution de colorant.
